# EUROPEAN PATENT SPECIFICATION

(11) **EP 3 739 710 B1**
(45) Date of publication and mention of the grant of the patent: **29.06.2022**
(21) Application number: 19174050.5
(22) Date of filing: 13.05.2019
(51) Int. Cl.: H02J 3/14, H02J 3/32, H02J 3/38, H02J 13/00

(54) **CONTROL OF PHOTOVOLTAIC SYSTEMS**
STEUERUNG VON FOTOVOLTAISCHEN SYSTEMEN
COMMANDE DE SYSTÈMES PHOTOVOLTAÏQUES

(43) Date of publication of application: 18.11.2020
(73) Proprietor: Siemens Schweiz AG, 8047 Zürich (CH)
(72) Inventor: Gähler, Conrad, 8047 Zürich (CH)
(74) Representative: Maier, Daniel Oliver

(56) References cited:
- EP-A1- 2 701 266
- US-A1- 2014 046 495
- US-A1- 2014 297 210
- US-A1- 2017 104 337
- US-A1- 2017 250 536
- US-A1- 2018 262 003
- US-B2- 10 270 283

## Description

### Background

The present disclosure relates to optimizations for power systems such as rooftop photovoltaic systems. The present disclosure focuses on improved forecasts of electric power supplied by such installations.

A plethora of parameters influence the amounts of power supplied by a photovoltaic installation. These parameters include, but are not limited to,
- geographical latitude,
- inverter efficiency,
- nearby obstacles such as nearby buildings,
- seasonal influences such as foliage,
- etc.

Parameters of a photovoltaic system such as inverter efficiency and geographical latitude may be configured during installation or commissioning. The system may then use a complex mathematical model to forecast its power output throughout the day.

A patent application WO2012/122234A2 was filed on 7 March 2012. The patent application WO2012/122234A2 was published on 13 September 2012. WO2012/122234A2 deals with systems and methods for optimizing energy and resource management for building systems. The optimizations of WO2012/122234A2 accommodate for onsite energy supply 310 as well as for onsite energy storage 312. An electrical model load model 306 as well as an electrical demand model 308 is generated based on subsystem measurements. These subsystem measurements pertain to sensor or equipment readings such as lighting readings within a room or within a group of rooms. Also, historical data such as temperature, humidity, carbon dioxide, air flow, weather conditions etc. may be factored in.

A European patent application EP2903217A1 was filed on 30 January 2014. The application EP2903217A1 was published on 5 August 2015. EP2903217A1 teaches a building automation method and a system. The method of EP2903217A1 comprises a step of averaging (4) data time histories. These data time histories are acquired from an input device such as a power meter, a water meter, an internet router, a temperature sensor, a light sensor etc. In addition, automated processes such as watering plants and/or telephones switching to sleep mode may be filtered (3) out of the data time history.

A European patent application EP2911018A1 was filed on 24 February 2014 and was published on 26 August 2015. The patent application EP2911018A1 teaches a building automation system that uses a predictive model. EP2911018A1 discloses an approach wherein a reading is acquired from an input device such as a power meter, a water meter, an internet router, a temperature sensor, a light sensor etc. The reading is then used as an input of a predictive model (3). An output value of the predictive model (3) is then compared to a measured value (1) and causes of such deviations are identified (7).

A patent application US2017/104337A1 was filed by Johnson Controls Technology Company (Plymouth, MI, US) on 25 August 2016. The application was published on 13 April 2017. US2017/104337A1 deals with a photovoltaic energy system having value function optimisation.

The present disclosure teaches a power system that minimizes the effort during installation and commissioning. The system largely dispenses with configuration data. Also, the system avoids use of complex mathematical relationships between parameters of an installation and the power output of an installation.

### Summary

The present disclosure teaches a power system that functions to forecast local energy conversion such as energy conversion by solar panels or wind turbines. The forecast amounts of power may then be used to make or break a connection between the power system and a load. The forecast amounts of power may also be used to switch variable loads connected to the power system and/or to the load. That is, variable loads can be enabled or disabled depending on availability of power from the power system.

It is also an object of the present disclosure to provide a power system that can be adapted to various voltage levels and to various power frequencies of a load.

It is still an object of the instant disclosure to provide a power system that is compact and to minimize the numbers of components that are prone to failure.

It is yet an object of the present disclosure to provide a power system operable to produce forecasts of supplied power, wherein the forecast is based on a statistical analysis of time histories of amounts of power supplied by the power system.

It is a related object of the instant disclosure to provide a power system operable to produce forecasts of supplied power, wherein weather forecasts such as local weather forecasts are factored in when forecasting power supply.

It is still a related object of the present disclosure to provide a power system operable to produce forecasts of supplied power, wherein temperatures such as local temperatures outside a building are factored in when forecasting power supply.

It is another object of the present disclosure to provide a power system operable to make a forecast of power supply available at a cloud service and/or at a load operator.

It is yet another object of the instant disclosure to provide a power system wherein an operator can set criteria applicable to load connection and/or load disconnection. It is still another object of the instant disclosure to provide a power system wherein an operator can set criteria applicable to control of variable loads such as washing machines, dryers, electric vehicles to be charged, etc.

It is still an object of the instant disclosure to provide a power system that makes full use of the digital communication capabilities of a controller of the power system.

### Brief description of the drawings

Various features will become apparent to those skilled in the art from the following detailed description of the disclosed non-limiting embodiments. The drawings that accompany the detailed description can be briefly described as follows:
FIG 1 is a schematic representation of a power system according to this disclosure.
FIG 2 schematically illustrates details of a connection to a cloud service.
FIG 3 schematically provides details of a power system installed on top of a building.

### Detailed description

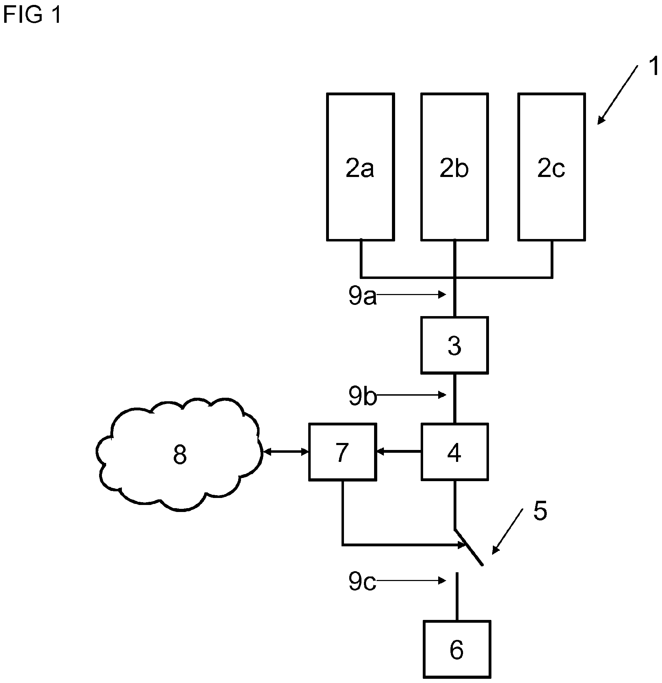

FIG 1 shows the various principal and optional components of a power system 1 of the instant disclosure. The power system 1 preferably is or comprises a photovoltaic system and/or a photovoltaic installation and/or a wind turbine system and/or a wind turbine installation and/or a wind farm system and/or a wind farm installation. The power system 1 comprises at least one energy conversion module 2a - 2c such as a solar panel or a wind turbine. It is envisaged that the power system 1 comprises different types of energy conversion modules 2a - 2c being lumped together. The power system 1 may, by way of non-limiting example, comprise a solar panel 2a, a wind turbine 2b, and a geothermal unit 2c.

The power system 1 also comprises a power conversion module 3 such as an inverter and/or a power transformer. An installation with one or more solar panels 2a - 2c can rely on an inverter 3. The inverter 3 produces an alternating current from a direct current originating from the one or more solar panels 2a - 2c. It is envisaged that the inverter produces an alternating current having a frequency of or near 50 Hertz and/or of or near 60 Hertz and/or of or near 400 Hertz. The inverter advantageously produces an alternating current that is synchronous to an alternating current of a load. The inverter 3 can also transform the output voltage of the one or more solar panels 2a - 2c into a load voltage. To that end, the inverter 3 can comprise several stages. It is envisaged that the inverter produces a load voltage of 110 Volts and/or of 190 Volts and/or of 240 Volts and/or of 420 Volts.

An installation with one or more wind turbines can rely on a power transformer 3. The power transformer 3 transforms the output voltage of the one or more wind turbines 2a - 2c into a load voltage. To that end, the power transformer 3 comprises a plurality of windings. The power transformer 3 advantageously comprises a tap changer to control the ratio of the power transformer 3. It is envisaged that the power transformer produces a load voltage of 4 kiloVolts phase-to-phase and/or of 11 kiloVolts phase-to-phase and/or of 35 kiloVolts phase-to-phase voltage.

A power meter 4 of the power system affords measurements of amounts of power. The power meter 4 can be a power meter 4 with sufficient accuracy such that the power meter 4 can be used for billing. The power meter 4 can also be a power meter designed for protection purposes. The power meter 4 advantageously comprises one or more current transformers for billing and/or for protection purposes.

A switch 5 connects the power system 1 to a load 6. The switch 5 is operable to connect the power system 1 to the load 6. It is envisaged that the switch 5 comprises a mechanical switch with a pair of contacts. The switch 5 then connects the power system 1 to the load 6 by closing its contacts. The switch 5 can, by way of non-limiting example, comprise a self-blast circuit breaker and/or a thermal buffer circuit breaker and/or a vacuum circuit breaker. In an embodiment, the switch 5 is part of a gas-insulated switchgear installation. It is also envisaged that the switch 5 comprises a semi-conductor switch such as a thyristor and/or an insulated-gate bipolar transistor (IGBT). In this case, the switch 5 makes the connection to the load 6 by controlling the voltage applied to the gate terminal of the semiconducting switch.

The switch 5 is also operable to break the connection to the power system 1 from the load 6. It is envisaged that the switch 5 comprises a mechanical switch with a pair of contacts. The switch 5 then breaks the connection to the load 6 by opening its contacts. The switch 5 can, by way of non-limiting embodiment, comprise a self-blast circuit breaker and/or a thermal buffer circuit breaker and/or a vacuum circuit breaker. In an embodiment, the switch 5 is part of a gas-insulated switchgear installation. It is also envisaged that the switch 5 comprises a semi-conductor switch such as an insulated-gate bipolar transistor (IGBT). In that case, the switch 5 breaks the connection to the load 6 by controlling the voltage applied to the gate terminal of the IGBT.

FIG 1 shows the power meter 4 situated between the power conversion module 3 and the switch 5. The skilled person understands that the meter 4 can also be situated between the energy conversion module(s) 2a - 2c and the power conversion module 3.

The load 6 can be a load 6 of a building. In this case, the load 6 is a single-phase load and/or a three-phase load. Typical voltages of the load 6 are 110 Volts (phase-to-earth) and/or 240 Volts (phase-to-earth) and/or 420 Volts (phase-to-phase). The load 6 typically provides electric currents of up to 10 Amperes and/or 16 Amperes and/or 25 Amperes.

The load 6 can be a load 6 of a power distribution network. In this case, the load 6 typically is a three-phase load or a six-phase load. Typical voltages of the load 6 are 4 kiloVolts (phase-to-phase) and/or 11 kiloVolts (phase-to-phase) and/or 35 kiloVolts (phase-to-phase).

A system controller 7 is in operative communication with the power meter 4. To that end, the system controller 7 can read digital and/or analog signals from the power meter 4. In an embodiment, the controller 7 samples analog signals between 0 milliAmpere and 20 milliAmperes and/or between 0 Volt and 3.3 Volts and/or between 0 Volt and 5 Volts. In an alternate embodiment, the digital communication bus connects the system controller 7 to the power meter 4. The digital communication bus preferably allows for bidirectional communication between the controller 7 and the power meter 4. The digital communication bus advantageously enables exchange of data packets between the system controller 7 and the power meter 4 in accordance with a digital communication protocol. The digital communication protocol can, by way of non-limiting example, be a protocol as defined in an IEC 61850 standard.

The system controller 7 can, by way of non-limiting example, comprise a microprocessor and/or a microcontroller. In an embodiment, the system controller 7 is based on, preferably is directly based on, a reduced instruction set architecture. In an alternate embodiment, the system controller 7 is based on, preferably is directly based on, a complex instruction set architecture. The system controller 7 advantageously comprises a memory and at least one arithmetic logic unit.

The arithmetic logic unit of the system controller 7 is in operative communication with the memory of the system controller 7. That way, data can be written to the memory and can be read from the memory. According to an aspect of the system controller 7, the arithmetic logic unit and the memory are arranged on the same chip, preferably on the same system on a chip (SoC).

In a compact embodiment, the system controller 7 and the power meter 4 form a single device. That is, the system controller 7 is lumped together with the (main components of the) power meter 4 in a single housing. The system controller 7 can, for instance, be installed in a single housing together with various current transformers of the power meter 4.

It is envisaged the system controller 7 has an operating system. The operating system can, for by way of non-limiting example, comprise a Windows^{®} operating system and/or a Linux^{®} operating system such as a Raspbian system. The skilled person also considers systems that have been tailored for use in embedded systems. A general-purpose system can also be employed as an operating system of the system controller 7.

In a practical scenario, the local computing capacity and/or the local storage capacity of the system controller 7 can be limited. That is why the system controller 7 ideally provides connectivity to connect the system controller 7 to one or more remote controllers 8. The connection between the system controller 7 the remote controller 8 preferably employs a transmission control protocol/internet protocol (TCP/IP) connection. According to a particular aspect, traffic along that connection follows a connectionless protocol. The connection may also employ a user datagram protocol (UDP) connection.

The remote controller 8 advantageously comprises a cloud computer and/or a cloud computing arrangement. The remote controller 8 can actually comprise a plurality of controllers arranged in a plurality of data centres. The remote controller 8 is typically located remotely from the power system 1.

A suitable wireless or hard-wired bus is employed to connect the system controller 7 and to the remote controller 8. The system controller 7 can, for instance, connect to a remote controller such as a cloud server 8 via wireless local area network (WLAN) and/or via a Zigbee^{®} wireless connection and/or via a telephony (global systems for mobile communications, GSM) network and/or via a proprietary wireless technique. Also, a concrete wall with high attenuation of radio frequency signals may hinder communication between the system controller 7 and the remote controller 8. In order to overcome issues due to noise and/or attenuation, the system controller 7 and/or remote controller 8 may harness techniques such as phase-shift keying and/or redundant datagram packets of limited size.

Data traffic via the connection between the system controller 7 and the remote computer 8 is preferably encrypted. In a sophisticated embodiment, a Diffie-Hellman key exchange is employed to encrypt traffic. In a very sophisticated embodiment, the Diffie-Hellman key exchange involves elliptic curves.

The power system 1 also comprises a power transmission bus 9a, 9b. The power transmission bus 9a, 9b extends from the one or more energy conversion modules 2a - 2c to the load 6.

A first stage 9a of the power transmission bus connects the one or more energy conversion modules 2a - 2c to the power conversion module 3. The first stage 9a of the power transmission bus can, by way of non-limiting example, be a low voltage power transmission bus 9a such as a power transmission bus 9a operating at voltages below 24 Volts, below 12 Volts, or even below 6 Volts. The first stage 9a can be a direct current power transmission bus depending on requirements of the one or more energy conversion modules 2a - 2c. A first stage 9a operating at low voltages and using direct currents offers advantages in terms of compatibility with solar panels 2a - 2c.

A second stage 9b of the power transmission bus connects the power conversion module to the power meter 4 and/or to the switch 5. The second stage 9b preferably has a voltage that is higher than the voltage of the first stage 9a. It is envisaged that the second stage 9b has a voltage of 110 Volts phase-to-earth and/or of 190 Volts phase-to-phase and/or of 240 Volts phase-to-earth and/or of 420 Volts phase-to-phase.

Also, the second stage preferably employs alternating electric currents. It is envisaged that the second stage 9b relies on alternating currents having a frequencies of or near 50 Hertz and/or of or near 60 Hertz and/or of or near 400 Hertz. The second stage 9b advantageously relies on an alternating current that is synchronous to an alternating current of the load 6. The above alternating currents and voltages confer benefits in terms of compatibility with common electric circuits in buildings.

FIG 1 shows the power meter 4 situated in the second stage 9b. The skilled person understands that the power meter 4 can also be situated in the first stage 9a.

A terminal stage 9c connects the switch 5 to the load 6. The terminal stage 9c has got the same voltage and employs the same (alternating) current as the load 6. The voltage of and the (alternating) current employed by the terminal stage 9c are synchronous to the power voltage of and to the current employed by the load 6.

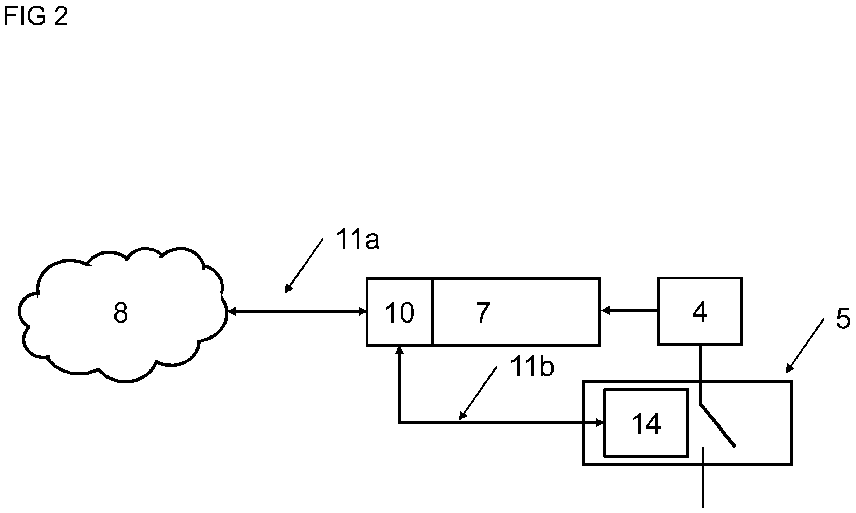

Now referring to FIG 2, a communication bus 11a is shown that connects the remote controller 8 to an interface 10 of the system controller 7. The interface 10 of the system controller 7 preferably is a digital communication interface such as a network card and/or a network adapter. It is also envisaged that the interface 10 is an integral part of the system controller 7. The interface 10 can, in a special embodiment, be arranged together with a memory and together with an arithmetic logic unit on a single printed circuit board. The interface 10 of the system controller 7 preferably comprises an Ethernet^{®} port. The communication bus 11a and the interface 10 advantageously afford bidirectional communication between the system controller 7 and the remote controller 8.

The interface 10 is also operable to connect the system controller 7 to the switch 5. To that end, the switch 5 provides a (digital) communication interface 14. The interface 10 of the system controller 7 and the communication interface 14 of the switch 5 can then connect via a communication bus 11b. In a simple embodiment, the communication bus 11b affords unidirectional communication. Data and/or instructions can thus be sent from the interface 10 of the system controller 7 to the interface 14 of the switch 5. Unidirectional communication along the communication bus 11b confers advantages in terms of reduced complexity. In another embodiment, the communication bus 11b affords bidirectional communication. Data and/or instructions can thus be sent from the interface 10 of the system controller 7 to the communication interface 14 of the switch 5 and vice versa. Bidirectional communication along the communication bus 11b confers advantages in terms of more flexible and more nuanced communication. The switch 5 can, for instance, employ a bidirectional bus 11b to forward data about its internal condition to the system controller 7.

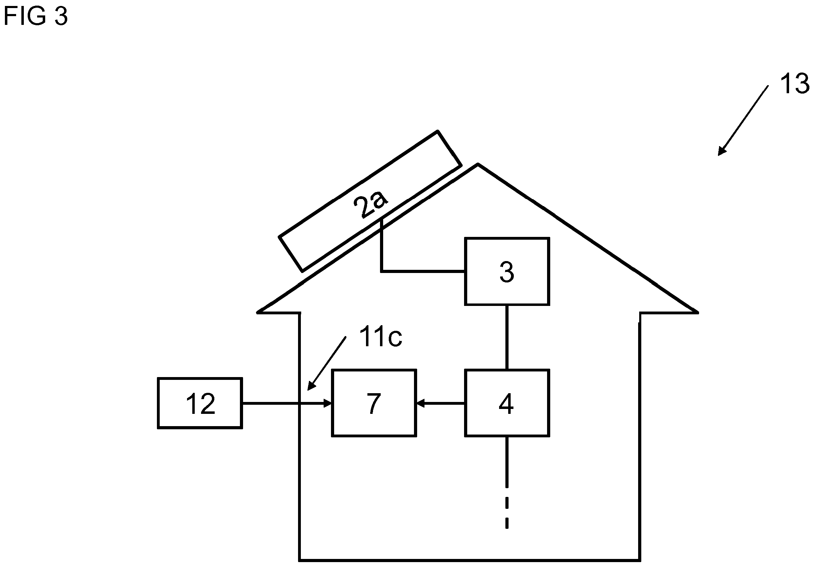

Now turning to FIG 3, a building 13 with a power system according to the instant disclosure is illustrated. The building 13 can be a commercial, a residential and/or an industrial building.

An energy conversion module 2a such as a solar panel can be installed as a rooftop module. The energy conversion module 2a is shown as secured relative to and/or mounted to a roof of the building 1. Whilst the energy conversion module 2a is installed outside the building, the power conversion module 3, the power meter 4, and the system controller 7 are preferably installed indoors. Indoor installation of such components 3, 4, 7 confers benefits in terms of protection from ambient stresses.

FIG 2 shows a single interface 10 connecting to the remote controller 8 as well as to the interface 14 of the switch 5. The system controller 7 can also provide separate interfaces that connect to the remote controller 8 and to the interface 14 of the switch 5.

FIG 3 depicts a sensor 12 such as a temperature sensor installed outside the building 13. The temperature sensor 12 is thus arranged to detect and/or to sample temperatures outside the building 13.

The system controller 7 is in operative communication with the temperature sensor 12. To that end, the system controller 7 can read digital and/or analog signals from the temperature sensor 12. In an embodiment, the controller 7 samples analog signals between 0 milliAmpere and 20 milliAmperes and/or between 0 Volt and 3.3 Volts and/or between 0 Volt and 5 Volts. In an alternate embodiment, the digital communication bus connects the system controller 7 to the temperature sensor 12. The digital communication bus 11c preferably allows for unidirectional communication from the sensor 12 to the system controller 7. Data and/or instructions can then be sent from the temperature sensor 12 to the system controller 7. Unidirectional communication confers advantages in terms of reduced complexity. In another embodiment, the communication bus 11c affords bidirectional communication. Data and/or instructions can thus be sent from the system controller 7 to the sensor 12 and vice versa. Bidirectional communication along the communication bus 11c confers advantages in terms of more flexible and more nuanced communication. The temperature sensor 12 advantageously communicates with the system controller 7 via the communication interface 10.

A suitable wireless or hard-wired bus can be employed to link the system controller 7 to the temperature sensor 12. The system controller 7 can, for instance, connect to the temperature sensor 12 via wireless local area network (WLAN) and/or via a Zigbee^{®} wireless connection and/or via a telephony (global systems for mobile communications, GSM) network and/or via a proprietary wireless technique. Also, a concrete wall with high attenuation of radio frequency signals may hinder communication between the system controller 7 and the sensor 12. In order to overcome issues due to noise and/or attenuation, the system controller 7 and/or the sensor 12 may harness techniques such as phase-shift keying and/or redundant datagram packets of limited size.

Data traffic via the connection between the system controller 7 and the temperature sensor 12 is preferably encrypted. In a sophisticated embodiment, a Diffie-Hellman key exchange is employed to encrypt traffic. In a very sophisticated embodiment, the Diffie-Hellman key exchange involves elliptic curves.

It is envisaged that the power system of the instant disclosure is employed in a hospital and/or in a hospital environment.

As described in detail herein, the instant disclosure teaches a power system (1) comprising:
at least one energy conversion module (2a, 2b, 2c), a power meter (4), a switch (5), a system controller (7), a power transmission bus (9a, 9b) extending from the at least one energy conversion module (2a, 2b, 2c) to the switch (5);
wherein the switch (5) is configured to connect the power transmission bus (9a, 9b) to a load (6) in response to receiving a load connection signal;
wherein the power meter (4) connects to the power transmission bus (9a, 9b) and is configured to record amounts of power being transmitted along the power transmission bus (9a, 9b);
the system controller (7) being in operative communication with the power meter (4) and with the switch (5) and being configured to:
   read a first time series having a first plurality of power signals and a second time series having a second plurality of power signals from the power meter (4), each power signal being indicative of an amount of power recorded by the power meter (4);
   determine from the first and from the second time series a maximum series having a plurality of entries, wherein at least one entry is determined by applying a maximum function to a power signal of the first plurality of power signals and to a power signal of the second plurality of power signals;
   determine a forecast series from the plurality of entries of the maximum series; and
   determine the load connection signal from the forecast series; and
   communicate the load connection signal to the switch (5).

In an embodiment, the power system (1) comprises a photovoltaic system and/or comprises a photovoltaic installation and/or comprises a wind power plant.

According to an aspect of the instant disclosure, the load (6) is selected from at least one of:
- a battery;
- a heat pump;
- a generic load.

According to a special aspect of the instant disclosure, the load (6) is selected from at least one of:
- a battery;
- a heat pump.

It is envisaged that the power transmission bus (9a, 9b) electrically connects to the at least one energy conversion module (2a, 2b, 2c). The power transmission bus (9a, 9b) advantageously is an electric power transmission bus (9a, 9b). In an embodiment, the power transmission bus (9a, 9b) comprises at lest one power transmission line. In a special embodiment, the power transmission bus (9a, 9b) is a power transmission line and/or is a power transmitter and/or is a power transmission circuit.

In an embodiment, the power meter (4) is serially connected to the power transmission bus (9a, 9b). It is envisaged that the power signal is a power level signal.

According to an aspect of the instant disclosure, the digital communication protocol is implemented by the system controller (7). That is, the system controller (7) has a set of instructions to communicate signals in accordance with the digital communication protocol.

It is envisaged that the at least one energy conversion module (2a, 2b, 2c) comprises a solar panel and/or comprises a wind turbine.

A maximum function applied to its arguments and returns its largest argument. That is, a maximum function of 2 and 5 returns 5.

An average function applied to its arguments calculates an average of its arguments. An average function can be selected from an arithmetic average function and/or a geometric average function and/or a first momentum function and/or a second momentum function. It is also envisaged to calculate a median of those arguments.

According to an aspect of the present disclosure, the forecast series comprises the maximum series. The forecast series can also be determined from the maximum series by truncating the maximum series. The maximum series in an embodiment is a maximum time series.

The present disclosure also teaches any of the aforementioned power systems (1), wherein the system controller (7) comprises a memory, the memory storing a threshold quantity, the system controller (7) being configured to:
read the threshold quantity from the memory;
calculate a quantity from the forecast series, the calculated quantity being selected from: a maximum value of the forecast series, a minimum value of the forecast series, a median value of the forecast series, an average value of the forecast series;
compare the calculated quantity to the threshold quantity;
determine the load connection signal from the forecast series based on the comparison; and
communicate the load connection signal to the switch (5).

In an alternate embodiment, the calculated quantity is selected from: a ninety percent quantile of the forecast series, a ninety-five percent quantile of the forecast series, an eighty percent quantile of the forecast series, a fifty percent quantile of the forecast series.

The present disclosure also teaches any of the aforementioned power systems (1), wherein the switch (5) is configured to connect the power transmission bus (9a, 9b) to a load (6) and to disconnect the power transmission bus (9a, 9b) from the load (6); and
wherein the power system (1) comprises a power conversion module (3) situated in the power transmission bus (9a, 9b), the power conversion module (3) being configured to convert electric power originating from the at least one energy conversion module (2a, 2b, 2c) into electric power suitable for the load (6).

The power conversion module (3) advantageously is a power conditioning module and/or a power conditioning unit. The power conversion module (3) can be serially connected to the power transmission bus (9a, 9b).

The present disclosure also teaches any of the aforementioned power systems (1), wherein the power meter (4) comprises the system controller (7).

The power meter (4) can, in particular, comprise an enclosure and the system controller (7) can be situated inside the enclosure of the power meter (4).

It is envisaged that the power conversion module (3) is secured relative to and/or mounted to the power system (1). It is also envisaged that the system controller (7) is secured relative to and/or mounted to the power system (1).

The instant disclosure further teaches any of the aforementioned power systems (1), wherein the system controller (7) is configured to:
read a plurality of time series from the power meter (4), wherein each time series has a plurality of power signals, each power signal being indicative of an amount of power recorded by the power meter (4);
determine from the plurality of time series an indexed series, the indexed series comprising at least one power signal from each time series; and
determine from the plurality of time series a maximum series having a plurality of entries, wherein at least one entry of the maximum series is a maximum value of the indexed series.

It is also envisaged to determine from the index series the maximum series, wherein at least one entry of the maximum series is a maximum value of the indexed series.

The instant disclosure still further teaches any of the aforementioned power systems (1), wherein the system controller (7) is configured to:
read a plurality of time series from the power meter (4), wherein each time series has a plurality of power signals, each power signal being indicative of an amount of power recorded by the power meter (4);
determine from the plurality of time series a plurality of indexed series, every indexed series comprising at least one power signal from each time series; and
determine from the plurality of indexed series a maximum series having a plurality of entries, wherein every entry of the maximum series is a maximum value of one indexed series of the plurality of indexed series.

It is envisaged that the indexed series correspond to column series of a matrix and that the time series correspond to row series of a matrix.

In an embodiment, the forecast series is or comprises the maximum series.

The present disclosure also teaches any of the aforementioned power systems (1), wherein the system controller (7) is configured to:
receive a weather forecast signal; and
determine the forecast series as a function of the plurality of entries of the maximum series and as a function of the weather forecast signal.

In an embodiment, the weather forecast signal is received by the system controller (7) via a digital communication bus (11a) and using a digital communication bus protocol. The system controller (7) preferably comprises a digital communication interface (10). That is, the system controller (7) is configured to receive the weather forecast signal via its communication interface (10) and using the digital communication bus protocol. According to a particular aspect of the instant disclosure, the system controller (7) is configured to receive the weather forecast signal from the remote controller (8) via the communication interface (10) and using the digital communication bus protocol.

It is envisaged that the remote controller (8) comprises a thermostat such as a smart thermostat. It is also envisaged that the remote controller (8) is a thermostat such as a smart thermostat.

The present disclosure also teaches the aforementioned power system (1), wherein the system controller (7) is configured to:
determine the forecast series as a function of the plurality of entries of the maximum series by modifying at least one entry of the maximum series as a function of the weather forecast signal.

The present disclosure further teaches the aforementioned power system (1), wherein the system controller (7) is configured to:
determine the forecast series as a function of the plurality of entries of the maximum series by modifying every entry of the maximum series as a function of the weather forecast signal.

The instant disclosure further teaches any of the aforementioned power systems (1),
wherein the power system (1) comprises a temperature sensor (12); and
wherein the system controller (7) is in operative communication with the temperature sensor (12) and is configured to:
   read a temperature signal from the temperature sensor (12); and
   determine the forecast series as a function of the plurality of entries of the maximum series and as a function of the temperature signal.

The instant disclosure also teaches the aforementioned power system (13), wherein the power system (1) comprises a building (13) and wherein the temperature sensor (12) is installed outside the building (13). The building (13) preferably is or comprises an industrial building and/or a commercial building and/or a residential building.

The present disclosure still further teaches the aforementioned power system (1), wherein the system controller (7) is configured to:
determine the forecast series as a function of the plurality of entries of the maximum series by modifying at least one entry of the maximum series as a function of the temperature signal.

The instant disclosure further teaches any of the aforementioned power systems (1), wherein the system controller (7) is configured to:
determine the forecast series as a function of the plurality of entries of the maximum series by modifying every entry of the maximum series as a function of the temperature signal.

The instant disclosure further teaches any of the aforementioned power systems (1), wherein the system controller (7) is configured to:
communicate the forecast series to a remote controller (8) using a digital communication protocol, the remote controller (8) being located remotely from the power system (1).

In an embodiment, the forecast series is communicated to the remote controller (8) via a digital communication bus (11a) and using a digital communication bus protocol. The system controller (7) preferably comprises a digital communication interface (10). That is, the system controller (7) is configured to communicate the forecast series to the remote controller (8) via its communication interface (10) and using the digital communication bus protocol.

It is envisaged that the system controller (7) is configured to communicate the load connection signal to the switch (5), the load connection signal causing the switch (5) to connect the power transmission bus (9a, 9b) to the load (6).

In an embodiment, the load connection signal is communicated to the switch (5) via a digital communication bus (11b) and using a digital communication bus protocol. To that end, the power system (1) advantageously comprises the digital communication bus (11b). The bus (11a) connecting the controller (7) to the remote controller (8) can actually be identical to the bus (11b) connecting the controller (7) to the breaker (5). The system controller (7) preferably comprises a digital communication interface (10). That is, the system controller (7) is configured to communicate the load connection signal to the switch (5) via its communication interface (10) and using the digital communication bus protocol.

In an embodiment, the switch (5) comprises a switch interface (14). That is, the load connection signal is communicated to the switch interface (14) via a digital communication bus (11b) and using a digital communication bus protocol. The switch (5) is configured to connect the power transmission bus (9a, 9b) to the load (6) in response to the switch interface (14) receiving the load connection signal.

The present disclosure also teaches the aforementioned power system (1), wherein the system controller (7) comprises a memory, the memory storing a threshold quantity, the system controller (7) being configured to:
read the threshold quantity from the memory;
calculate a quantity from the forecast series, the calculated quantity being selected from a maximum value of the forecast series, a minimum value of the forecast series, a median value of the forecast series, an average value of the forecast series;
compare the calculated quantity to the threshold quantity;
determine the load connection signal from the forecast series based on the comparison; and
communicate the load connection signal to the switch (5).

It is envisaged that the system controller (7) is in operative communication with the memory.

In an embodiment, the system controller (7) is configured to determine the load connection signal from the forecast series, if the calculated quantity exceeds the threshold quantity. In an alternate embodiment, the system controller (7) is configured to determine the load connection signal from the forecast series, if the calculated quantity is less than the threshold quantity.

The present disclosure still further teaches a method for controlling a power system (1), the power system (1) comprising a power meter (4), the method comprising the steps of:
receiving a weather forecast signal;
reading a plurality of time series from the power meter (4), wherein each time series has a plurality of power signals, each power signal being indicative of an amount of power recorded by the power meter (4);
determining from the plurality of time series a plurality of indexed series, every indexed series comprising at least one power signal from each time series;
determining from the plurality of time series a maximum series having a plurality of entries, wherein at least one entry of the maximum series is a maximum value of one index series of the plurality of indexed series;
determining a forecast series by modifying every entry of the maximum series as a function of the weather forecast signal;
determining a load connection signal from the forecast series; and
communicating the load connection signal to a switch (5).

The instant disclosure also teaches a non-transitory, computer-readable medium containing a program which executes the steps of any of the aforementioned methods

It is envisaged that the computer-readable medium contains instructions that when executed perform the steps and/or perform the method according to the present disclosure. It is also envisaged that the computer-readable medium is tangible.

Any steps of a method according to the present disclosure may be embodied in hardware, in a software module executed by a processor, in a software module being executed using operating-system-level virtualization, in a cloud computing arrangement, or in a combination thereof. The software may include a firmware, a hardware driver run in the operating system, or an application program. Thus, the disclosure also relates to a computer program product for performing the operations presented herein. If implemented in software, the functions described may be stored as one or more instructions on a computer-readable medium. Some examples of storage media that may be used include random access memory (RAM), read only memory (ROM), flash memory, EPROM memory, EEPROM memory, registers, a hard disk, a removable disk, other optical disks, or any available media that can be accessed by a computer or any other IT equipment and appliance.

It should be understood that the foregoing relates only to certain embodiments of the disclosure and that numerous changes may be made therein without departing from the scope of the disclosure as defined by the following claims. It should also be understood that the disclosure is not restricted to the illustrated embodiments and that various modifications can be made within the scope of the following claims.

### Reference numerals

- 1: power system
- 2a, 2b, 2c: energy conversion module
- 3: power conversion module
- 4: power meter
- 5: switch
- 6: load
- 7: system controller
- 8: remote controller
- 9a,: 9b power transmission bus
- 9c: terminal stage
- 10: interface
- 11a, 11b: communication bus
- 12: temperature sensor
- 13: building
- 14: switch interface

## Claims

1. A power system (1) comprising:
at least one energy conversion module (2a, 2b, 2c), a power meter (4), a switch (5), a system controller (7), a power transmission bus (9a, 9b) extending from the at least one energy conversion module (2a, 2b, 2c) to the switch (5);
wherein the at least one energy conversion module (2a, 2b, 2c) comprises a solar panel and/or comprises a wind turbine;
wherein the switch (5) is configured to connect the power transmission bus (9a, 9b) to a load (6) in response to receiving a load connection signal;
wherein the power meter (4) connects to the power transmission bus (9a, 9b) and is configured to record amounts of power being transmitted along the power transmission bus (9a, 9b);
the system controller (7) being in operative communication with the power meter (4) and with the switch (5) and being configured to:
read a first time series having a first plurality of power signals and a second time series having a second plurality of power signals from the power meter (4), each power signal being indicative of an amount of power recorded by the power meter (4);
**characterised in that** the system controller (7) is configured to:
determine from the first and from the second time series a maximum series having a plurality of entries, wherein at least one entry is determined by applying a maximum function to a power signal of the first plurality of power signals and to a power signal of the second plurality of power signals;
determine a forecast series from the plurality of entries of the maximum series; and
determine the load connection signal from the forecast series; and
communicate the load connection signal to the switch (5).

2. The power system (1) according to claim 1, wherein the system controller (7) comprises a memory, the memory storing a threshold quantity, the system controller (7) being configured to:
read the threshold quantity from the memory;
calculate a quantity from the forecast series, the calculated quantity being selected from: a maximum value of the forecast series, a minimum value of the forecast series, a median value of the forecast series, an average value of the forecast series;
compare the calculated quantity to the threshold quantity;
determine the load connection signal from the forecast series based on the comparison; and
communicate the load connection signal to the switch (5).

3. The power system (1) according to any of the claims 1 to 2, wherein the switch (5) is configured to connect the power transmission bus (9a, 9b) to a load (6) and to disconnect the power transmission bus (9a, 9b) from the load (6); and
wherein the power system (1) comprises a power conversion module (3) situated in the power transmission bus (9a, 9b), the power conversion module (3) being configured to convert electric power originating from the at least one energy conversion module (2a, 2b, 2c) into electric power suitable for the load (6).

4. The power system (1) according to any of the claims 1 to 3, wherein the power meter (4) comprises the system controller (7).

5. The power system (1) according to any of the claims 1 to 4, wherein the system controller (7) is configured to:
read a plurality of time series from the power meter (4), wherein each time series has a plurality of power signals, each power signal being indicative of an amount of power recorded by the power meter (4);
determine from the plurality of time series an indexed series, the indexed series comprising at least one power signal from each time series; and
determine from the plurality of time series a maximum series having a plurality of entries, wherein at least one entry of the maximum series is a maximum value of the indexed series.

6. The power system (1) according to any of the claims 1 to 5, wherein the system controller (7) is configured to:
read a plurality of time series from the power meter (4), wherein each time series has a plurality of power signals, each power signal being indicative of an amount of power recorded by the power meter (4);
determine from the plurality of time series a plurality of indexed series, every indexed series comprising at least one power signal from each time series; and
determine from the plurality of indexed series a maximum series having a plurality of entries, wherein every entry of the maximum series is a maximum value of one indexed series of the plurality of indexed series.

7. The power system (1) according to any of the claims 1 to 6, wherein the system controller (7) is configured to:
receive a weather forecast signal; and
determine the forecast series as a function of the plurality of entries of the maximum series and as a function of the weather forecast signal.

8. The power system (1) according to claim 7, wherein the system controller (7) is configured to:
determine the forecast series as a function of the plurality of entries of the maximum series by modifying at least one entry of the maximum series as a function of the weather forecast signal.

9. The power system (1) according to claim 7, wherein the system controller (7) is configured to:
determine the forecast series as a function of the plurality of entries of the maximum series by modifying every entry of the maximum series as a function of the weather forecast signal.

10. The power system (1) according to any of the claims 1 to 9,
wherein the power system (1) comprises a temperature sensor (12); and
wherein the system controller (7) is in operative communication with the temperature sensor (12) and is configured to:
read a temperature signal from the temperature sensor (12); and
determine the forecast series as a function of the plurality of entries of the maximum series and as a function of the temperature signal.

11. The power system (1) according to claim 10, wherein the system controller (7) is configured to:
determine the forecast series as a function of the plurality of entries of the maximum series by modifying at least one entry of the maximum series as a function of the temperature signal.

12. The power system (1) according to claim 10, wherein the system controller (7) is configured to:
determine the forecast series as a function of the plurality of entries of the maximum series by modifying every entry of the maximum series as a function of the temperature signal.

13. The power system (1) according to any of the claims 1 to 12,
wherein the system controller (7) is configured to:
communicate the forecast series to a remote controller (8) using a digital communication protocol, the remote controller (8) being located remotely from the power system (1).

14. A method for controlling a power system (1), the power system (1) comprising a power meter (4), the power system (1) comprising a photovoltaic installation and/or a wind turbine installation, the method comprising the steps of:
receiving a weather forecast signal;
reading a plurality of time series from the power meter (4), wherein each time series has a plurality of power signals, each power signal being indicative of an amount of power recorded by the power meter (4);
determining from the plurality of time series a plurality of indexed series, every indexed series comprising at least one power signal from each time series;
determining from the plurality of time series a maximum series having a plurality of entries, wherein at least one entry of the maximum series is a maximum value of one indexed series of the plurality of indexed series;
determining a forecast series by modifying every entry of the maximum series as a function of the weather forecast signal;
determining a load connection signal from the forecast series; and
communicating the load connection signal to a switch (5).

15. A non-transitory, computer-readable medium containing a program which executes the steps of claim 14.

## Patentansprüche

1. Energieversorgungssystem (1), das Folgendes umfasst:
mindestens ein Energieumwandlungsmodul (2a, 2b, 2c), einen Leistungsmesser (4), einen Schalter (5), eine Systemsteuerung (7), einen Energieübertragungsbus (9a, 9b), der von dem mindestens einen Energieumwandlungsmodul (2a, 2b, 2c) bis zu dem Schalter (5) verläuft;
wobei das mindestens eine Energieumwandlungsmodul (2a, 2b, 2c) ein Solarpanel und/oder eine Windturbine umfasst;
wobei der Schalter (5) so konfiguriert ist, dass er den Energieübertragungsbus (9a, 9b) als Reaktion auf das Empfangen eines Lastanschlusssignals an eine Last (6) anschließt;
wobei der Leistungsmesser (4) an den Energieübertragungsbus (9a, 9b) angeschlossen und so konfiguriert ist, dass er erfasst, welche Strommengen über den Energieübertragungsbus (9a, 9b) übertragen werden,
wobei die Systemsteuerung (7) mit dem Leistungsmesser (4) und mit dem Schalter (5) wirkverbunden und so konfiguriert ist, dass sie:
eine erste Zeitreihe mit einer ersten Vielzahl Stromsignale und eine zweite Zeitreihe mit einer zweiten Vielzahl Stromsignale aus dem Leistungsmesser (4) ausliest, wobei jedes Stromsignal eine von dem Leistungsmesser (4) erfasste Strommenge angibt;
**dadurch gekennzeichnet, dass** die Systemsteuerung (7) so konfiguriert ist, dass sie:
aus der ersten und der zweiten Zeitreihe eine Maximalwertreihe mit mehreren Einträgen bestimmt, wobei mindestens ein Eintrag durch Anwenden einer Maximalwertfunktion auf ein Stromsignal aus der ersten Vielzahl Stromsignale und ein Stromsignal aus der zweiten Vielzahl Stromsignale bestimmt wird;
aus der Vielzahl Einträge in der Maximalwertreihe eine Prognosereihe bestimmt und
aus der Prognosereihe das Lastanschlusssignal bestimmt und
das Lastanschlusssignal zum Schalter (5) weiterleitet.

2. Das Energieversorgungssystem (1) nach Anspruch 1, wobei die Systemsteuerung (7) einen Speicher umfasst, der einen Grenzwert speichert, wobei die Systemsteuerung (7) so konfiguriert ist, dass sie:
den Grenzwert aus dem Speicher ausliest,
aus der Prognosereihe einen Wert berechnet, der unter einem Maximalwert der Prognosereihe, einem Mindestwert der Prognosereihe, einem Medianwert der Prognosereihe und einem Durchschnittswert der Prognosereihe ausgewählt ist,
den berechneten Wert mit dem Grenzwert vergleicht,
aus der Prognosereihe auf der Grundlage des Vergleichs das Lastanschlusssignal bestimmt und
das Lastanschlusssignal zum Schalter (5) weiterleitet.

3. Das Energieversorgungssystem (1) nach einem der Ansprüche 1 bis 2, wobei der Schalter (5) so konfiguriert ist, dass er den Energieübertragungsbus (9a, 9b) an eine Last (6) anschließt und den Energieübertragungsbus (9a, 9b) von der Last (6) trennt, und
wobei das Energieversorgungssystem (1) ein Stromrichtmodul (3) umfasst, das sich in dem Energieübertragungsbus (9a, 9b) befindet, wobei das Stromrichtmodul (3) so konfiguriert ist, dass es elektrischen Strom aus dem mindestens einen Energieumwandlungsmodul (2a, 2b, 2c) in für die Last (6) geeigneten elektrischen Strom umwandelt.

4. Das Energieversorgungssystem (1) nach einem der Ansprüche 1 bis 3, wobei der Leistungsmesser (4) die Systemsteuerung (7) umfasst.

5. Das Energieversorgungssystem (1) nach einem der Ansprüche 1 bis 4, wobei die Systemsteuerung (7) so konfiguriert ist, dass sie:
eine Vielzahl von Zeitreihen aus dem Leistungsmesser (4) ausliest, wobei jede Zeitreihe eine Vielzahl Stromsignale aufweist, von denen jedes eine von dem Leistungsmesser (4) erfasste Strommenge angibt,
aus der Vielzahl von Zeitreihen eine indizierte Reihe bestimmt, die mindestens ein Stromsignal aus jeder Zeitreihe umfasst, und
aus der Vielzahl Zeitreihen eine Maximalwertreihe mit einer Vielzahl von Einträgen bestimmt, wobei es sich bei mindestens einem Eintrag in der Maximalwertreihe um einen Maximalwert der indizierten Reihe handelt.

6. Das Energieversorgungssystem (1) nach einem der Ansprüche 1 bis 5, wobei die Systemsteuerung (7) so konfiguriert ist, dass sie:
eine Vielzahl von Zeitreihen aus dem Leistungsmesser (4) ausliest, wobei jede Zeitreihe eine Vielzahl Stromsignale aufweist, von denen jedes eine von dem Leistungsmesser (4) erfasste Strommenge angibt,
aus der Vielzahl von Zeitreihen eine Vielzahl von indizierten Reihen bestimmt, von denen jede mindestens ein Stromsignal aus jeder Zeitreihe umfasst, und
aus der Vielzahl von indizierten Reihen eine Maximalwertreihe mit einer Vielzahl von Einträgen bestimmt, wobei es sich bei jedem Eintrag in der Maximalwertreihe um einen Maximalwert einer der Vielzahl von indizierten Reihen handelt.

7. Das Energieversorgungssystem (1) nach einem der Ansprüche 1 bis 6, wobei die Systemsteuerung (7) so konfiguriert ist, dass sie:
ein Wetterberichtssignal empfängt und
in Abhängigkeit von der Vielzahl von Einträgen in der Maximalwertreihe und in Abhängigkeit von dem Wetterberichtssignal die Prognosereihe bestimmt.

8. Das Energieversorgungssystem (1) nach Anspruch 7, wobei die Systemsteuerung (7) so konfiguriert ist, dass sie:
in Abhängigkeit von der Vielzahl von Einträgen in der Maximalwertreihe durch Modifizieren mindestens eines Eintrags in der Maximalwertreihe in Abhängigkeit von dem Wetterberichtssignal die Prognosereihe bestimmt.

9. Das Energieversorgungssystem (1) nach Anspruch 7, wobei die Systemsteuerung (7) so konfiguriert ist, dass sie:
in Abhängigkeit von der Vielzahl von Einträgen in der Maximalwertreihe durch Modifizieren jedes Eintrags in der Maximalwertreihe in Abhängigkeit von dem Wetterberichtssignal die Prognosereihe bestimmt.

10. Das Energieversorgungssystem (1) nach einem der Ansprüche 1 bis 9,
wobei das Das Energieversorgungssystem (1) einen Temperatursensor (12) umfasst und
wobei die Systemsteuerung (7) mit dem Temperatursensor (12) wirkverbunden und so konfiguriert ist, dass sie:
ein Temperatursignal aus dem Temperatursensor (12) ausliest und
in Abhängigkeit von der Vielzahl von Einträgen in der Maximalwertreihe und in Abhängigkeit von dem Temperatursignal die Prognosereihe bestimmt.

11. Das Energieversorgungssystem (1) nach Anspruch 10, wobei die Systemsteuerung (7) so konfiguriert ist, dass sie:
in Abhängigkeit von der Vielzahl von Einträgen in der Maximalwertreihe durch Modifizieren mindestens eines Eintrags in der Maximalwertreihe in Abhängigkeit von dem Temperatursignal die Prognosereihe bestimmt.

12. Das Energieversorgungssystem (1) nach Anspruch 10, wobei die Systemsteuerung (7) so konfiguriert ist, dass sie:
in Abhängigkeit von der Vielzahl von Einträgen in der Maximalwertreihe durch Modifizieren jedes Eintrags in der Maximalwertreihe in Abhängigkeit von dem Temperatursignal die Prognosereihe bestimmt.

13. Das Energieversorgungssystem (1) nach einem der Ansprüche 1 bis 12,
wobei die Systemsteuerung (7) so konfiguriert ist, dass sie:
die Prognosereihe mithilfe eines Digitalkommunikationsprotokolls zu einer Fernsteuerung (8) weiterleitet, die sich außerhalb des Energieversorgungssystems (1) befindet.

14. Verfahren zum Steuern eines Energieversorgungssystems (1), wobei das Energieversorgungssystem (1) einen Leistungsmesser (4) umfasst, wobei das Energieversorgungssystem (1) eine Photovoltaikanlage und/oder eine Windturbinenanlage umfasst, wobei das Verfahren folgende Schritte umfasst:
Empfangen eines Wetterberichtssignals;
Auslesen einer Vielzahl von Zeitreihen aus dem Leistungsmesser (4), wobei jede Zeitreihe eine Vielzahl Stromsignale aufweist, von denen jedes eine von dem Leistungsmesser (4) erfasste Strommenge angibt;
Bestimmen einer Vielzahl von indizierten Reihen, von denen jede mindestens ein Stromsignal aus jeder Zeitreihe umfasst, aus der Vielzahl von Zeitreihen;
Bestimmen einer Maximalwertreihe mit einer Vielzahl von Einträgen aus der Vielzahl von Zeitreihen, wobei es sich bei mindestens einem Eintrag in der Maximalwertreihe um einen
Maximalwert einer der Vielzahl von indizierten Reihen handelt;
Bestimmen einer Prognosereihe durch Modifizieren jedes Eintrags in der Maximalwertreihe in Abhängigkeit von dem Wetterberichtssignal;
Bestimmen eines Lastanschlusssignals aus der Prognosereihe und
Weiterleiten des Lastanschlusssignals zu einem Schalter (5) .

15. Nichtflüchtiges, computerlesbares Medium, das ein Programm enthält, welches die Schritte aus Anspruch 14 ausführt.

## Revendications

1. Système électrique (1), comprenant :
au moins un module (2a, 2b, 2c) de conversion d'énergie, un wattmètre (4), un commutateur (5), un contrôleur de système (7), un bus (9a, 9b) de transmission de puissance s'étendant depuis l'au moins un module (2a, 2b, 2c) de conversion d'énergie jusqu'au commutateur (5) ;
dans lequel l'au moins un module (2a, 2b, 2c) de conversion d'énergie comprend un panneau solaire et/ou comprend une éolienne ;
dans lequel le commutateur (5) est configuré pour connecter le bus (9a, 9b) de transmission de puissance à une charge (6) en réponse à la réception d'un signal de connexion de charge ;
dans lequel le wattmètre (4) se connecte au bus (9a, 9b) de transmission de puissance et est configuré pour enregistrer des quantités de puissance étant transmises le long du bus (9a, 9b) de transmission de puissance ;
le contrôleur de système (7) étant en communication opérationnelle avec le wattmètre (4) et avec le commutateur (5) et étant configuré pour :
lire une première série chronologique ayant une première pluralité de signaux de puissance et une deuxième série chronologique ayant une deuxième pluralité de signaux de puissance provenant du wattmètre (4), chaque signal de puissance étant indicatif d'une quantité de puissance enregistrée par le wattmètre (4) ;
**caractérisé en ce que** le contrôleur de système (7) est configuré pour :
déterminer à partir de la première et à partir de la deuxième séries chronologiques une série maximale ayant une pluralité d'entrées, dans lequel au moins une entrée est déterminée en appliquant une fonction maximale à un signal de puissance de la première pluralité de signaux de puissance et à un signal de puissance de la deuxième pluralité de signaux de puissance ;
déterminer une série de prévisions à partir de la pluralité d'entrées de la série maximale ; et
déterminer le signal de connexion de charge à partir de la série de prévisions ; et
communiquer le signal de connexion de charge au commutateur (5) .

2. Le système électrique (1) selon la revendication 1, dans lequel le contrôleur de système (7) comprend une mémoire, la mémoire stockant une quantité de seuil, le contrôleur de système (7) étant configuré pour :
lire la quantité de seuil dans la mémoire ;
calculer une quantité à partir de la série de prévisions, la quantité calculée étant choisie parmi : une valeur maximale de la série de prévisions, une valeur minimale de la série de prévisions, une valeur médiane de la série de prévisions, une valeur moyenne de la série de prévisions,
comparer la quantité calculée à la quantité de seuil ;
déterminer le signal de connexion de charge à partir de la série de prévisions sur la base de la comparaison ; et
communiquer le signal de connexion de charge au commutateur (5) .

3. Le système électrique (1) selon l'une quelconque des revendications 1 à 2, dans lequel le commutateur (5) est configuré pour connecter le bus (9a, 9b) de transmission de puissance à une charge (6) et pour déconnecter le bus (9a, 9b) de transmission de puissance de la charge (6) ; et
dans lequel le système électrique (1) comprend un module (3) de conversion de puissance situé dans le bus (9a, 9b) de transmission de puissance, le module (3) de conversion de puissance étant configuré pour convertir une énergie électrique provenant de l'au moins un module (2a, 2b, 2c) de conversion d'énergie en une énergie électrique appropriée à la charge (6).

4. Le système électrique (1) selon l'une quelconque des revendications 1 à 3, dans lequel le wattmètre (4) comprend le contrôleur de système (7).

5. Le système électrique (1) selon l'une quelconque des revendications 1 à 4, dans lequel le contrôleur de système (7) est configuré pour :
lire une pluralité de séries chronologiques à partir du wattmètre (4), dans lequel chaque série chronologique a une pluralité de signaux de puissance, chaque signal de puissance étant indicatif d'une quantité de puissance enregistrée par le wattmètre (4) ;
déterminer à partir de la pluralité de séries chronologiques une série indexée, la série indexée comprenant au moins un signal de puissance provenant de chaque série chronologique ; et
déterminer à partir de la pluralité de séries chronologiques une série maximale ayant une pluralité d'entrées, dans lequel au moins une entrée de la série maximale est une valeur maximale de la série indexée.

6. Le système électrique (1) selon l'une quelconque des revendications 1 à 5, dans lequel le contrôleur de système (7) est configuré pour :
lire une pluralité de séries chronologiques à partir du wattmètre (4), dans lequel chaque série chronologique a une pluralité de signaux de puissance, chaque signal de puissance étant indicatif d'une quantité de puissance enregistrée par le wattmètre (4) ;
déterminer à partir de la pluralité de séries chronologiques une pluralité de séries indexées, chaque série indexée comprenant au moins un signal de puissance provenant de chaque série chronologique ; et
déterminer à partir de la pluralité de séries indexées une série maximale ayant une pluralité d'entrées, dans lequel chaque entrée de la série maximale est une valeur maximale d'une série indexée de la pluralité de séries indexées.

7. Le système électrique (1) selon l'une quelconque des revendications 1 à 6, dans lequel le contrôleur de système (7) est configuré pour :
recevoir un signal de prévision météorologique ; et
déterminer la série de prévisions comme une fonction de la pluralité d'entrées de la série maximale et comme une fonction du signal de prévision météorologique.

8. Le système électrique (1) selon la revendication 7, dans lequel le contrôleur de système (7) est configuré pour :
déterminer la série de prévisions comme une fonction de la pluralité d'entrées de la série maximale en modifiant au moins une entrée de la série maximale comme une fonction du signal de prévision météorologique.

9. Le système électrique (1) selon la revendication 7, dans lequel le contrôleur de système (7) est configuré pour :
déterminer la série de prévisions comme une fonction de la pluralité d'entrées de la série maximale en modifiant chaque entrée de la série maximale comme une fonction du signal de prévision météorologique.

10. Le système électrique (1) selon l'une quelconque des revendications 1 à 9,
dans lequel le système électrique (1) comprend un capteur (12) de température ; et
dans lequel le contrôleur de système (7) est en communication opérationnelle avec le capteur (12) de température et est configuré pour :
lire un signal de température provenant du capteur (12) de température ; et
déterminer la série de prévisions comme une fonction de la pluralité d'entrées de la série maximale et comme une fonction du signal de température.

11. Le système électrique (1) selon la revendication 10, dans lequel le contrôleur de système (7) est configuré pour :
déterminer la série de prévisions comme une fonction de la pluralité d'entrées de la série maximale en modifiant au moins une entrée de la série maximale comme une fonction du signal de température.

12. Le système électrique (1) selon la revendication 10, dans lequel le contrôleur de système (7) est configuré pour :
déterminer la série de prévisions comme une fonction de la pluralité d'entrées de la série maximale en modifiant chaque entrée de la série maximale comme une fonction du signal de température.

13. Le système électrique (1) selon l'une quelconque des revendications 1 à 12,
dans lequel le contrôleur de système (7) est configuré pour :
communiquer la série de prévisions à un contrôleur à distance (8) en utilisant un protocole de communication numérique, le contrôleur à distance (8) étant situé à distance du système électrique (1).

14. Procédé de commande d'un système électrique (1), le système électrique (1) comprenant un wattmètre (4), le système électrique (1) comprenant une installation photovoltaïque et/ou une installation éolienne, le procédé comprenant les étapes de :
réception d'un signal de prévision météorologique ;
lecture d'une pluralité de séries chronologiques à partir du wattmètre (4), dans lequel chaque série chronologique a une pluralité de signaux de puissance, chaque signal de puissance étant indicatif d'une quantité de puissance enregistrée par le wattmètre (4) ;
détermination à partir de la pluralité de séries chronologiques d'une pluralité de séries indexées, chaque série indexée comprenant au moins un signal de puissance provenant de chaque série chronologique ;
détermination à partir de la pluralité de séries chronologiques d'une série maximale ayant une pluralité d'entrées, dans lequel au moins une entrée de la série maximale est une valeur maximale d'une série indexée de la pluralité de séries indexées ;
détermination d'une série de prévisions en modifiant chaque entrée de la série maximale comme une fonction du signal de prévision météorologique ;
détermination d'un signal de connexion de charge à partir de la série de prévisions ; et
communication du signal de connexion de charge à un commutateur (5).

15. Support non transitoire lisible par ordinateur contenant un programme qui exécute les étapes de la revendication 14.
